(19) Europäisches Patentamt
European Patent Office
Office européen des brevets

(11) EP 0 736 504 B1

(12) **EUROPÄISCHE PATENTSCHRIFT**

(45) Veröffentlichungstag und Bekanntmachung des Hinweises auf die Patenterteilung:
**19.08.1998 Patentblatt 1998/34**

(51) Int. Cl.$^6$: **C04B 41/49**, C04B 41/68, C09D 183/04

(21) Anmeldenummer: **96105434.3**

(22) Anmeldetag: **04.04.1996**

(54) **Zweistufiges Verfahren zur wasserabweisenden Imprägnierung von Mauerwerk**
A two-step process for the water-repellent impregnation of masonry
Procédé en deux étapes pour l'imprégnation hydrofuge de maçonnerie

(84) Benannte Vertragsstaaten:
**AT BE CH DE FR GB IT LI**

(30) Priorität: **07.04.1995 DE 19513238**

(43) Veröffentlichungstag der Anmeldung:
**09.10.1996 Patentblatt 1996/41**

(73) Patentinhaber:
**Wacker-Chemie GmbH**
**81737 München (DE)**

(72) Erfinder:
- **Weber, Helmut, Prof. Dr.**
  **85560 Ebersberg (DE)**
- **Gollwitzer, Leonhard**
  **85305 Jetzendorf (DE)**
- **Matschiner, Ulrike**
  **81673 München (DE)**

(74) Vertreter:
**Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 518 324** **EP-A- 0 531 134**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 736 504 B1

## Beschreibung

Die Erfindung betrifft ein zweistufiges Verfahren zur wasserabweisenden Imprägnierung von Mauerwerk. Im ersten Schritt wird das Mauerwerk mit einer mit Wasser verdünnten, imprägnierenden Zusammensetzung behandelt, die Organoalkoxysilan und/oder Alkoxygruppen enthaltendes Organosiloxan und ein Salz von wasserlöslicher Säure und Organopolysiloxan mit SiC-gebundenen Resten mit basischem Stickstoff umfaßt. Im zweiten Schritt wird das Mauerwerk mit einer wäßrigen Lösung von Alkalisilicaten und/oder Alkalisiliconaten behandelt.

Mit Wasser verdünnte Zusammensetzungen, aus Organoalkoxysilan und/oder Alkoxygruppen enthaltendem Organosiloxan und einem Salz von wasserlöslicher Säure und Organopolysiloxan mit SiC-gebundenen Resten mit basischem Stickstoff sind Mikroemulsionen, mit denen Mauerwerk wasserabweisend imprägniert werden kann. Solche Zusammensetzungen scheiden schnell die imprägnierenden Wirkstoffe in basischen Mauerwerken ab. Alte Mauerwerke weisen jedoch meistens keine Basizität mehr auf. Noch langsamer scheiden sich die imprägnierenden Wirkstoffe in altem, durchfeuchteten Mauerwerk ab. Beispielsweise werden die mit Wasser verdünnten Zusammensetzungen nach einer Injektion zur Bildung einer Sperrschicht gegen aufsteigende Feuchtigkeit hochgeschwemmt und bilden im ungünstigsten Fall die Sperrschicht erst weiter oben, wo das Mauerwerk zu trocknen beginnt.

In US-A-5,250,106 ist die Behandlung von altem und feuchtem Mauerwerk mit einer vorstehend beschriebenen mit Wasser verdünnten, imprägnierenden Zusammensetzung und zusätzlich mit wäßrigen Alkali- oder Erdalkalihydroxidlösungen beschrieben. Die imprägnierende Wirkung ist jedoch in der Praxis, insbesondere bei der Bekämpfung aufsteigender Feuchtigkeit zu gering. Größere Mengen an Alkalimetall- oder Magnesiumionen sind im Mauerwerk unerwünscht, da sie ausblühende Salze bilden können. Calciumhydroxid ist für die Anwendung in Mauerwerken zu wenig in Wasser löslich.

In der DE-A-42 20 684 ist ein Verfahren zum Sanieren von Altmauerwerk und zum Erzeugen einer Horizontalsperre gegen aufsteigende Feuchtigkeit beschrieben, bei dem Sacklöcher in das Mauerwerk gebohrt werden, eine Zementsuspension eingepreßt und eine Silicatlösung in die noch feuchte Zementsuspension injiziert wird.

Bei der Verwendung von in Wasser gelösten Alkalisilicaten, gegebenenfalls wie in der GB-A-1,177,662 in Kombination mit Alkalisiliconat beschrieben, entstehen im Mauerwerk wasserlösliche, hygroskopische, ausblühfähige Alkalicarbonate. Wenn diese Alkalisiliconate und Alkalisilicate als alleinige Wirkstoffe eingesetzt werden, sind große Mengen davon erforderlich und es entstehen deshalb große Mengen an Alkalicarbonaten. Bei dicken Mauerwerken ist der zur Wirkstoffbildung erforderliche Zutritt von $CO_2$ aus der Luft sehr erschwert. Ferner ist die wasserabweisende Wirkung der Alkalisiliconate und Alkalisilicate nicht ausreichend.

Der vorliegenden Erfindung liegt die Aufgabe zugrunde, ein Verfahren zur wasserabweisenden Imprägnierung von Mauerwerk, insbesondere zur Bekämpfung von aufsteigender Feuchtigkeit bereitzustellen, bei dem mit Wasser verdünnte Zusammensetzungen verwendet werden und das besonders bei altem und gegebenenfalls feuchtem Mauerwerk wirksam ist.

Die Erfindung betrifft ein Verfahren zur wasserabweisenden Imprägnierung von Mauerwerk durch Behandeln des Mauerwerks in einem ersten Schritt mit einer hochdispersen, in Wasser emulgierten, imprägnierenden Zusammensetzung, die

(A1) Organoalkoxysilan oder
(A2) Alkoxygruppen enthaltendes Organosiloxan oder
(A3) ein Gemisch aus Organoalkoxysilan und Alkoxygruppen enthaltendem Organosiloxan und
(B) Salz von wasserlöslicher organischer oder anorganischer Säure und Organopolysiloxan umfaßt, das zusätzlich zu anderen Organosiloxaneinheiten solche Siloxaneinheiten enthält, die einwertige, über Sic-gebundene Reste mit basischem Stickstoff in Mengen von mindestens 0,5 Gew.- % basischem Stickstoff, bezogen auf das Gewicht des Organopolysiloxans, aufweisen, umfaßt,

wobei in einem zweiten Schritt das Mauerwerk mit einer Lösung von

(C1) Alkalisilicat oder
(C2) Alkalisiliconat oder
(C3) einem Gemisch aus Alkalisilicat und Alkalisiliconat in Wasser behandelt wird.

Beim Zusammenbringen der Komponenten (A), (B) und (C) im Mauerwerk wird die Emulsion der imprägnierenden Zusammensetzung gebrochen und Alkalisilicat bzw. Alkalisiliconat als Kieselsäure bzw. Organosiloxan ausgefällt. Die Wirkstoffe lagern sich in den Poren des Mauerwerks sofort nach dem Einbringen von (C1) Alkalisilicat oder (C2) Alkalisiliconat ab und hydrophobieren diese. Altes, durchfeuchtetes Mauerwerk wird ebenso wie neues, trockenes und alkalisches Mauerwerk dauerhaft wasserabweisend imprägniert.

Eine Behandlung des Mauerwerks in umgekehrter Reihenfolge, nämlich zuerst mit (C1) Alkalisilicat oder (C2) Alkalisiliconat und anschließend mit der hochdispersen, in Wasser emulgierten, imprägnierenden Zusammensetzung bringt schlechtere Wasserabweisung des Mauerwerks mit sich. Die imprägnierende Zusammensetzung lagert sich dann in der Nähe der Stelle, an der (C1) Alkalisilicat oder (C2) Alkalisiliconat aufgebracht ist, sofort ab und dringt nicht tief ins Mauerwerk ein.

Das Verfahren eignet sich zur wasserabweisenden Imprägnierung von jeder Art von Mauerwerk, beispielsweise von Ziegelsteinen, bewehrtem und unbewehrtem Beton, Porenbeton, rheinischem Bims, Natursteinen einschließlich Kalksteinen, Gips, Schlackensteinen und Kalksandsteinen.

Das Verfahren eignet sich besonders für die Tiefenimprägnierung von bereits durchfeuchtetem altem Mauerwerk. Bevorzugt wird das erfindungsgemäße Verfahren zur Bekämpfung von im Mauerwerk aufsteigender Feuchtigkeit eingesetzt, wobei die vorstehenden Komponenten (A1) oder (A2) oder (A3) und (B) und (C1) oder (C2) oder (C3) in das Mauerwerk injiziert werden. Dabei werden vorzugsweise Bohrlöcher dicht über dem Bodenniveau außen und/oder innen in die Mauer, vorzugsweise nach innen geneigt, gesetzt. Die Bohrlöcher werden vorzugsweise im Abstand von 5 bis 20 cm, insbesondere 9 bis 13 cm angebracht. Bei Mauerwerken ab einer Mauerdicke von 60 cm werden vorzugsweise eine Bohrlochreihe innen und eine Bohrlochreihe außen angelegt.

In diese Bohrlöcher werden dann als Injektionsmittel zuerst die Emulsion der imprägnierenden Zusammensetzung und wäßrige Lösung von (C1) Alkalisilicat oder (C2) Alkalisiliconat eingebracht. Hierbei kann mit oder ohne Druck gearbeitet werden. Zweckmäßigerweise verwendet man für beide Schritte die gleichen Bohrlöcher. Die Injektionsmittel können in die Bohrlöcher eingefüllt werden, beispielsweise mit einer Gießkanne, oder über an dem Bohrloch angebrachte Vorratsgefäße. Die Injektionsmittel können auch über Lanzen impulsartig in die Bohrlöcher eingebracht werden. Vorzugsweise werden die Injektionsmittel mit Druck, vorzugsweise bis 3 MPa, insbesondere bei 0,5 bis 2 MPa in das Mauerwerk eingepreßt. Vorzugsweise werden dabei Packer genannte, in das Bohrloch eingesetzte Hülsen verwendet.

Die Mauer kann dort, wo die Bohrlöcher angebracht werden, völlig durchfeuchtet sein. Nach Abreagieren der imprägnierenden Zusammensetzung und der wäßrigen Lösung von (C1) Alkalisilicat oder (C2) Alkalisiliconat bildet sich eine Sperrschicht. Darüber trocknet das Mauerwerk aus.

Bei hohlräumigen und inhomogenen Mauerwerken, wie Bruchstein-, Hohlziegelmauerwerken und unvollständig verfugten Mauerwerken besteht die Gefahr einer unkontrollierten Verteilung der Injektionsmittel über die Fehlstellen im Mauerwerk. Bei derartigen Mauerwerken wird vorzugsweise vor dem Injizieren der in Wasser emulgierten, imprägnierenden Zusammensetzung eine Injektion einer Zementsuspension durchgeführt, um die Hohlräume zu füllen. Vorzugsweise wird feinstgemahlener Zement verwendet, der auch als Mikrozement bezeichnet wird. Zuvor wird unverputztes Mauerwerk vorzugsweise in der Injektionsebene verschlämmt, um ein Austreten der Zementsuspension, der in Wasser emulgierten, imprägnierenden Zusammensetzung und der wäßrigen Lösung von (C1) Alkalisilicat oder (C2) Alkalisiliconat zu verhindern.

Nach dem Erstarren der Zementsuspension werden die Bohrlöcher neu aufgebohrt oder es wird oberhalb der Bohrlochreihe, über die die Zementinjektion erfolgte, eine zweite Bohrlochreihe angelegt, über die dann die in Wasser emulgierte, imprägnierende Zusammensetzung und die wäßrige Lösung von (C1) Alkalisilicat oder (C2) Alkalisiliconat eingebracht werden. In einer bevorzugten Ausführungsform wird die Zementsuspension über Packer injiziert. Nach Ausbreiten der Zementsuspension werden die Packer mit einer lanzenartigen Vorrichtung aufgestoßen. Danach werden die in Wasser emulgierte, imprägnierende Zusammensetzung und die wäßrige Lösung von (C1) Alkalisilicat oder (C2) Alkalisiliconat eingebracht.

Vorzugsweise wird 15 bis 200 Minuten, insbesondere 30 bis 60 Minuten nach der Injektion der Zementsuspension gewartet, bevor die in Wasser emulgierte, imprägnierende Zusammensetzung eingebracht wird. Der Abstand zwischen der Anwendung der in Wasser emulgierten, imprägnierenden Zusammensetzung und der wäßrigen Lösung von (C1) Alkalisilicat oder (C2) Alkalisiliconat beträgt vorzugsweise mindestens 120 Minuten, insbesondere 180 Minuten und vorzugsweise höchstens 5 Tage, insbesondere 2 Tage.

Die verwendete imprägnierende Zusammensetzung kann ein Organoalkoxysilan (A1) oder ein Gemisch mehrerer Organoalkoxysilane enthalten. Die Organoalkoxysilane enthalten mindestens einen und höchstens 3 über SiC-gebundene Kohlenwasserstoffreste und mindestens einen und höchstens 3 Alkoxyreste. Vorzugsweise besitzen die Organoalkoxysilane (A1) 1 oder 2 gleiche oder verschiedene, gegebenenfalls halogensubstituierte, über SiC-gebundene einwertige $C_1$-$C_{15}$-Kohlenwasserstoffreste und die übrigen Reste sind gleiche oder verschiedene $C_1$-$C_6$-Alkoxyreste.

Beispiele für die $C_1$-$C_{15}$-Kohlenwasserstoffreste sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; Aralkylreste, wie der Benzylrest, der alpha- und der β- Phenylethylrest.

Beispiele für halogensubstituierte $C_1$-$C_{15}$-Kohlenwasserstoffreste sind mit Fluor-, Chlor-, Brom- und Jodatomen substituierte Alkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Besonders bevorzugt sind die nicht substituierten $C_1$-$C_8$-Alkylreste und der Phenylrest.

Beispiele für $C_1$-$C_6$-Alkoxyreste des Organoalkoxysilans (A1) sind der Methoxy-, Ethoxy-, n-Propoxy-, Isopropoxy-, n-Butoxy-, iso-Butoxy-, sec.-Butoxy-, tert.-Butoxyrest; Pentyloxyreste, wie der n-Pentyloxyrest und Hexyloxyreste, wie der n-Hexyloxyrest. Die Methoxy- und Ethoxyreste sind besonders bevorzugt.

Die Alkoxyreste können mit Halogenatomen substituiert sein, jedoch ist dies nicht bevorzugt.

Die imprägnierende Zusammensetzung kann ein Alkoxygruppen enthaltendes Organosiloxan (A2) oder ein Gemisch mehrerer Organosiloxane enthalten. Die Organosiloxane sind oligomere oder polymere siliciumorganische Verbindungen, bei denen die Siliciumatome über Sauerstoffatome verknüpft sind und die SiC-gebundene organische Reste enthalten. Die Organosiloxane können zusätzlich Hydroxylgruppen enthalten, die eine Bindung an das Mauerwerk erleichtern.

Die Organosiloxane weisen vorzugsweise eine Viskosität von höchstens 2000 mPa • s auf, um eine besonders gute Verteilung auf den Porenoberflächen im Mauerwerk zu gewährleisten.

Besonders geeignet sind die Organosiloxane (A2) aus Einheiten der allgemeinen Formel I

$$R_xSi(OR^1)_y(OH)_zO_{\frac{4-x-y-z}{2}} \qquad (I),$$

in der

- **R** gleiche oder verschiedene einwertige, gegebenenfalls halogensubstituierte, über SiC-gebundene $C_1$-$C_{15}$-Kohlenwasserstoffreste,
- **$R^1$** gleiche oder verschiedene einwertige $C_1$-$C_6$-Alkylreste,
- **x** 0, 1, 2 oder 3, durchschnittlich 0,9 bis 1,8,
- **y** 0,1 2, oder 3, durchschnittlich 0,01 bis 2,0 und
- **z** 0, 1, 2 oder 3, durchschnittlich 0,0 bis 0,5 bedeutet,

mit der Maßgabe, daß die Summe von **x**, **y** und **z** höchstens 3,5 beträgt.

Vorzugsweise weist das Organosiloxan (A2) eine Viskosität von höchstens 300 mPa • s auf. Organosiloxane (A2) mit Viskositäten von 5 bis 100 mPa • s sind am meisten bevorzugt. Beispiele für die $C_1$-$C_{15}$-Kohlenwasserstoffreste sind die vorstehend bei den Organoalkoxysilanen (A1) aufgeführten $C_1$-$C_{15}$-Kohlenwasserstoffreste und halogensubstituierten $C_1$-$C_{15}$-Kohlenwasserstoffreste. Besonders bevorzugt sind die nicht substituierten $C_1$-$C_8$-Alkylreste und der Phenylrest.

Obwohl in der vorstehenden Formel nicht aufgeführt, kann ein Teil der Reste R durch direkt an Siliciumatome gebundene Wasserstoffatome ersetzt sein. Dies ist jedoch nicht bevorzugt.

Beispiele für die Reste $R^1$ sind der Methyl-, Ethyl-, n-Propyl-, Isopropyl-, n-Butyl-, sec.-Butyl-, und tert.-Butylrest; Pentylreste, wie der n-Pentylrest und Hexylreste, wie der n- Hexylrest, wobei die Methyl- und Ethylreste besonders bevorzugt sind.

Besonders bevorzugt als Organosiloxane (A2) sind solche, die durch Umsetzung von Methyltrichlorsilan und einem $C_1$-$C_8$-Alkyltrichlorsilan, oder Phenyltrichlorsilan mit Methanol oder Ethanol in Wasser erhältlich sind.

Bei dem erfindungsgemäßen Verfahren werden vorzugsweise die Salze (B) verwendet, die erhältlich sind aus Polysiloxanen, die aufgebaut sind aus Einheiten der allgemeinen Formel II

$$R^2_aR^3_b(OR^4)_cSiO_{\frac{4-a-b-c}{2}} \qquad (II),$$

in der

- **$R^2$** gleiche oder verschiedene einwertige, von basischem Stickstoff freie, über SiC-gebundene $C_1$-$C_{15}$-Kohlenwasserstoffreste oder Wasserstoff,
- **$R^3$** gleiche oder verschiedene einwertige SiC-gebundene Reste mit basischem Stickstoff,
- **$R^4$** Wasserstoff oder gleiche oder verschiedene $C_1$-$C_4$-Alkylreste bedeutet,

**a** 0, 1, 2 oder 3, durchschnittlich 0 bis 2, insbesondere 0 bis 1,8,
**b** 0 oder 1, durchschnittlich 0,1 bis 0,6, insbesondere 0,15 bis 0,30 und
**c** 0, 1, 2 oder 3, durchschnittlich 0,1 bis 0,8, insbesondere 0,2 bis 0,6 ist.

Vorzugsweise beträgt die Summe der jeweiligen Durchschnittswerte von **a**, **b** und **c** höchstens 3,4. Die Viskosität beträgt vorzugsweise 1 bis 2000, insbesondere 10 bis 100 mPa • s.

Vorzugsweise ist an jedes Siliciumatom, an das ein Wasserstoff gebunden ist, auch ein Kohlenwasserstoffrest, insbesondere ein Methylrest gebunden.

Beispiele für die $C_1$-$C_{15}$-Kohlenwasserstoffreste für $\mathbf{R^2}$ sind die vorstehend bei den Organoalkoxysilanen (A1) aufgeführten $C_1$-$C_{15}$-Kohlenwasserstoffreste. Besonders bevorzugt ist der Methyl- und der Phenylrest.

Als Reste $\mathbf{R^3}$ sind solche der allgemeinen Formel (III)

$$R^5_2NR^6- \qquad \text{(III)},$$

bevorzugt, in der

$\mathbf{R^5}$ Wasserstoff oder gleiche oder verschiedene $C_1$-$C_{15}$-Alkyl- oder $C_1$-$C_{15}$-Aminoalkylreste und
$\mathbf{R^6}$ einen zweiwertigen $C_1$-$C_{18}$-Kohlenwasserstoffrest bedeutet.

Die vorstehenden Beispiele für Alkylreste für $\mathbf{R^2}$ beziehen sich auch auf $\mathbf{R^5}$. Wenn der Rest $\mathbf{R^5}$ einen $C_1$-$C_{15}$-Aminoalkylrest bedeutet, trägt dessen Aminogruppe vorzugsweise zwei Wasserstoffatome.

Vorzugsweise ist an jedes Stickstoffatom der vorstehenden Formel mindestens ein Wasserstoffatom gebunden.

Beispiele für zweiwertige Kohlenwasserstoffreste $\mathbf{R^6}$ sind gesättigte Alkylenreste wie der Methylen-, und Ethylenrest, sowie Propylen-, Butylen-, Pentylen-, Hexylen-, Cyclohexylen- und Octadecylenreste oder ungesättigte Alkylen- oder Arylenreste wie der Hexenylrest und Phenylenreste, wobei der n-Propylenrest besonders bevorzugt ist.

Bevorzugte Beispiele für Reste $\mathbf{R^3}$ sind
$H_2N(CH_2)_3$-,
$H_2N(CH_2)_2NH(CH_2)_2$-,
$H_2N(CH_2)_2NH(CH_2)_3$-,
$H_2N(CH_2)_2$-,
$H_3CNH(CH_2)_3$-,
$C_2H_5NH(CH_2)_3$-,
$H_3CNH(CH_2)_2$-,
$C_2H_5NH(CH_2)_2$-,
$H_2N(CH_2)_4$-,
$H_2N(CH_2)_5$-,
$H(NHCH_2CH_2)_3$-,
$C_4H_9NH(CH_2)_2NH(CH_2)_2$-,
cyclo-$C_6H_{11}NH(CH_2)_3$-,
cyclo-$C_6H_{11}NH(CH_2)_2$-,
$(CH_3)_2N(CH_2)_3$- ,
$(CH_3)_2N(CH_2)_2$- ,
$(C_2H_5)_2N(CH_2)_3$- und
$(C_2H_5)_2N(CH_2)_2$- .

Beispiele für die Reste $\mathbf{R^4}$ sind die vorstehend für die Reste $\mathbf{R^1}$ aufgeführten $C_1$-$C_4$-Alkylreste. Besonders bevorzugt sind die Methyl- und Ethylreste.

Zur Herstellung des Salzes (B) sind alle wasserlöslichen organischen und anorganischen Säuren geeignet, die sich in ihrer Salzform gegenüber den übrigen Bestandteilen der imprägnierenden Zusammensetzung chemisch inert verhalten. Beispiele für derartige Säuren sind Salz-, Schwefel-, Phosphor-, Essig- und Propionsäure. Essigsäure und Propionsäure sind bevorzugt.

Die imprägnierende Zusammensetzung kann zusätzlich zu (A1) Alkoxysilan und/oder (A2) Organosiloxan und (B) Salz von wasserlöslicher organischer oder anorganischer Säure und Organopolysiloxan (D) monomere und/oder polymere Kieselsaüreester mit $C_1$-$C_6$-Alkoxyresten und einer Viskosität von höchstens 20 mPa • s enthalten. Es kann ein bestimmter Kieselsäureester oder ein Gemisch verschiedener Kieselsäureester verwendet werden.

Bevorzugte Kieselsäureester enthalten $C_1$-$C_3$-Alkoxyreste und weisen eine Viskosität von 1 bis 5 mPa • s auf.

Beispiele bevorzugter Kieselsäureester sind Tetramethylsilikat, Tetraethylsilikat und Tetraisopropylsilikat.

Die imprägnierenden Zusammensetzungen enthalten vorzugsweise 20 bis 80 Gew.-%, insbesondere 35 bis 55 Gew.-% Organoalkoxysilan (A1).

Die bevorzugten Mengen an Organosiloxan (A2) betragen in den imprägnierenden Zusammensetzungen 5 bis 80 Gew.-%, insbesondere 10 bis 30 Gew.-%.

Das Gewichtsverhältnis von Alkylalkoxysilan (A1) zu Organosiloxan (A2) kann in den imprägnierenden Zusammensetzungen von 0:1 bis 1:0 reichen, beträgt aber vorzugsweise 2:1 bis 10:1.

Die imprägnierenden Zusammensetzungen enthalten vorzugsweise 5 bis 50 Gew.-%, insbesondere 15 bis 30 Gew.-% Salz (B).

Wenn die imprägnierenden Zusammensetzungen zusätzlich Kieselsäureester (D) enthalten, beträgt deren Menge höchstens 30 Gew-%, vorzugsweise 5 bis 15 Gew.-%.

Das Salz (B) dient für die Komponenten (A1), (A2) und gegebenenfalls (D) als Emulgator. Die imprägnierenden Zusammensetzungen werden im Verfahren im Gewichtsverhältnis 1:4 bis 1:30, vorzugsweise 1:11 bis 1:14 mit Wasser verdünnt und als feinteilige Emulsion, vorzugsweise als Mikroemulsion eingesetzt.

Die imprägnierenden Zusammensetzungen können zusätzlich zu den vorstehend beschriebenen Bestandteilen als Zusatzstoffe Fungizide, Bakterizide, Algicide, Mikrobiocide, Geruchsstoffe, Korrosionsinhibitoren und Entschäumer enthalten. Die imprägnierenden Zusammensetzungen enthalten Zusatzstoffe jeweils vorzugsweise in Mengen von 0,001 bis 1 Gew.-%, insbesondere von 0,01 bis 0,1 Gew.-%.

Die im zweiten Verfahrensschritt eingesetzten Alkalisilicate (C1) und Alkalisiliconate (C2) sind vorzugsweise aus Einheiten der allgemeinen Formel IV

$$M_dR^7_eSi\,O_{\frac{4-d-e}{2}} \qquad (IV),$$

aufgebaut, in der

**M** Natrium oder Kaliumatome,
**$R^7$** gleiche oder verschiedene einwertige, über SiC-gebundene $C_1$-$C_{15}$-Kohlenwasserstoffreste,
**d** 0, 1, 2 oder 3, durchschnittlich 0,5 bis 2,2, insbesondere 0,8 bis 1,5 und
**e** 0, 1, 2, oder 3, durchschnittlich 0 bis 2,0, insbesondere 0 bis 1,5 bedeuten

mit der Maßgabe, daß die Summe der jeweiligen Durchschnittswerte von **d** und **e** höchstens 3,0 beträgt.

Beispiele für die Reste **$R^7$** sind die vorstehend für die Reste **$R^1$** aufgeführten $C_1$-$C_6$-Alkylreste. Besonders bevorzugt sind die Methyl-, Ethyl-, n-Propyl- und Isopropylreste.

Wenn **e** in allen Einheiten der allgemeinen Formel IV den Wert 0 bedeutet, handelt es sich um Alkalisilicat (C1). Die Natrium- und Kaliumsalze der Kieselsäuren werden auch als Wasserglas bezeichnet.

Die Alkalisilicate weisen vorzugsweise ein molares Verhältnis $SiO_2$ : $M_2O$ von 8,0 bis 0,5, insbesondere von 5,0 bis 1,5 auf.

Die Konzentrationen der im zweiten Verfahrensschritt eingesetzten wäßrigen Lösung von Alkalisilicate (C1) und Alkalisiliconate (C2) oder (C3) einem Gemisch davon betragen vorzugsweise 0,5 bis 20 Gew.-%, insbesondere 2 bis 10 Gew.-%.

Vorzugsweise werden im zweiten Schritt pro Gewichtsteil der Summe der im ersten Schritt eingesetzten Komponenten (A1) Organoalkoxysilan, (A2) Alkoxygruppen enthaltendes Organosiloxan und Salz (B) 0,05 bis 3, insbesondere 0,2 bis 1 Gewichtsteile der Summe aus Alkalisilicaten (C1) und Alkalisiliconaten (C2), jeweils berechnet als wasserfreie Stoffe eingesetzt.

Im gesamten Text sind, falls jeweils nicht anders angegeben,

a) alle Mengenangaben auf das Gewicht bezogen;
b) alle Drücke 0,10 MPa (abs.);
c) alle Temperaturen 25°C;
d) alle Viskositätsangaben auf 25°C bezogen.

Beispiele

**Herstellung der imprägnierenden Zusammensetzung Herstellung des Organosiloxans (A2)**

In einer kontinuierlich arbeitenden Umsetzungsanlage wurde ein Gemisch aus 2 Gew.-Teilen Methyltrichlorsilan und 1 Gew.-Teil i-Octyltrichlorsilan mit einem Gemisch aus 1 Gew.-Teil Wasser und 2 Gew.-Teilen Methanol derart in

Reaktion gebracht, daß ein Hydrolysat mit einer Viskosität von 14 mPa • s erhalten wurde.

**Herstellung des Salzes (B)**

In einem 1l-Dreihalskolben mit Rührer, Tropftrichter und Rückflußkühler wurden unter Rühren zu einem Gemisch aus 0,2 g KOH in 4 g Methanol und 500 g des Organopolysiloxans der Summenformel

$$CH_3Si(OC_2H_5)_{0,8}O_{1,1}$$

mit einem durchschnittlichen Molekulargewicht von etwa 600 g/Mol und einer Viskosität von etwa 20 mPa • s 150 g N-(2-Aminoethyl)-3-aminopropyltrimethoxysilan gegeben und das so erhaltene Gemisch 6 Stunden zum Sieden unter Rückfluß erwärmt. Anschließend wurde auf 30°C gekühlt und mit 2,5 ml 10%-iger Salzsäure vermischt. Durch Erwärmen auf bis zu 140°C wurde schließlich das Methanol abdestilliert und das so erhaltene Salz (B) von KCl durch Filtrieren befreit. Das Salz (B) enthielt 2,9 % basischen Stickstoff, bezogen auf sein Gewicht.

**Herstellung der imprägnierenden Zusammensetzung**

24,2 Gew.-Teile des vorstehend beschriebenen Salzes (B) wurden nacheinander mit 6 Gew.-Teilen Eisessig, 45,6 Gew-Teilen Isooctyltrimethoxysilan, 13,8 Gew.-Teilen Tetraethylsilikat und 10,4 Gew.-Teilen des vorstehend beschriebenen Organosiloxans (A2) vermischt und 5 Stunden auf 90°C erwärmt, wobei sich eine klare Lösung bildete. Nach dem Abkühlen wurde die erhaltene imprägnierende Zusammensetzung entsprechend den Angaben in den nachstehenden Beispielen mit Wasser verdünnt. Man erhielt hochdisperse, durchsichtige Gemische.

**Herstellung der alkalischen Lösung**

1000 g eines Kaliwasserglases mit einem $SiO_2$-Gehalt von 28 Gew.-% und einem pH-Wert von 13 wurden mit 3 l Wasser, 300 ml einer 50 Gew.-%igen wäßrigen KOH-Lösung und 800 g einer wäßrigen Lösung von Kaliummethylsiliconat mit 20 Gew.-% Silicongehalt und 15 Gew.-% KOH-Gehalt vermischt. Der pH-Wert der klaren Mischung betrug 13,02.

**Beispiel 1 (Vergleichsbeispiel)**

Eine durch aufsteigende Feuchtigkeit durchfeuchtete alte Kalksteinmauer der Dicke 75 cm aus mit Kalkmörtel verfugten Bruchsteinen wurde mit einer horizontalen Reihe von Bohrlöchern mit einem Abstand von jeweils etwa 10 bis 12 cm versehen. Der Feuchtegehalt im Mörtelbereich betrug 9 bis 10 Gew.-%.
Durch die Bohrlöcher wurden zuerst 5 l und nach 2 Stunden weitere 5 l pro laufendem Meter Mauerwerk einer 1 : 5 Verdünnung der vorstehend hergestellten imprägnierenden Zusammensetzung mit Wasser injiziert.
Nach 11 Wochen wurden der Feuchtegehalt im Mörtelbereich jeweils 15 cm unterhalb und oberhalb der Injektionsebene bestimmt. Er betrug

unterhalb der Injektionsebene:
9,89 Gew.-% und
oberhalb der Injektionsebene:
7,65 Gew.-%.

**Beispiel 2 (Vergleichsbeispiel)**

In die in Beispiel 1 beschriebene Mauer wurden zuerst 5 l pro laufendem Meter Mauerwerk der vorstehend beschriebenen alkalischen Lösung injiziert. Nach 2 Stunden weitere 5 l pro laufendem Meter Mauerwerk einer 1 : 5 Verdünnung der vorstehend hergestellten imprägnierenden Zusammensetzung mit Wasser injiziert.
Nach 11 Wochen wurde der Feuchtegehalt im Mörtelbereich jeweils 15 cm unterhalb und oberhalb der Injektionsebene bestimmt. Er betrug

unterhalb der Injektionsebene:
6,89 Gew.-% und
oberhalb der Injektionsebene:
12,91 Gew.-%.

**Beispiel 3 (erfindungsgemäß)**

In die in Beispiel 1 beschriebene Mauer wurden zuerst 5 l Pro laufendem Meter Mauerwerk einer 1 : 5 Verdünnung der vorstehend beschriebenen imprägnierenden Zusammensetzung mit Wasser injiziert. Nach 2 Stunden wurden 5 l pro laufendem Meter Mauerwerk der vorstehend beschriebenen alkalischen Lösung injiziert.
Nach 11 Wochen wurde der Feuchtegehalt im Mörtelbereich jeweils 15 cm unterhalb und oberhalb der Injektionsebene bestimmt. Er betrug

unterhalb der Injektionsebene:
11,06 Gew.-% und
oberhalb der Injektionsebene:
3,73 Gew.-%.

**Beispiel 4 (erfindungsgemäß)**

In die in Beispiel 1 beschriebene Mauer wurden zuerst 5 l pro laufendem Meter Mauerwerk einer 1 : 10 Verdünnung der vorstehend beschriebenen imprägnierenden Zusammensetzung mit Wasser injiziert. Nach 2 Stunden wurden 5 l pro laufendem Meter Mauerwerk der vorstehend beschriebenen alkalischen Lösung injiziert.
Nach 11 Wochen wurde der Feuchtegehalt im Mörtelbereich jeweils 15 cm unterhalb und oberhalb der Injektionsebene bestimmt. Er betrug

unterhalb der Injektionsebene:
10,29 Gew.-% und
oberhalb der Injektionsebene:
1,14 Gew.-%.

**Patentansprüche**

1. Verfahren zur wasserabweisenden Imprägnierung von Mauerwerk durch Behandeln des Mauerwerks in einem ersten Schritt mit einer hochdispersen, in Wasser emulgierten, imprägnierenden Zusammensetzung, die

   (A1) Organoalkoxysilan oder
   (A2) Alkoxygruppen enthaltendes Organosiloxan oder
   (A3) ein Gemisch aus Organoalkoxysilan und Alkoxygruppen enthaltendem Organosiloxan und
   (B) Salz von wasserlöslicher organischer oder anorganischer Säure und Organopolysiloxan umfaßt, das zusätzlich zu anderen Organosiloxaneinheiten solche Siloxaneinheiten enthält, die einwertige, über SiC-gebundene Reste mit basischem Stickstoff in Mengen von mindestens 0,5 Gew.- % basischem Stickstoff, bezogen auf das Gewicht des Organopolysiloxans, aufweisen, umfaßt,

   wobei in einem zweiten Schritt das Mauerwerk mit einer Lösung von

   (C1) Alkalisilicat oder
   (C2) Alkalisiliconat oder
   (C3) einem Gemisch aus Alkalisilicat und Alkalisiliconat in Wasser behandelt wird.

2. Verfahren nach Anspruch 1, wobei
   die Organoalkoxysilane (A1) 1 oder 2 gleiche oder verschiedene, gegebenenfalls halogensubstituierte, über SiC-gebundene einwertige $C_1$-$C_{15}$-Kohlenwasserstoffreste aufweisen und die übrigen Reste gleiche oder verschiedene $C_1$-$C_6$-Alkoxyreste aufweisen sind.

3. Verfahren nach Anspruch 1 oder 2, wobei die Organosiloxane (A2) aus Einheiten der allgemeinen Formel I

$$R_xSi(OR^1)_y(OH)_zO_{\frac{4-x-y-z}{2}} \qquad (I),$$

aufgebaut sind, in der

- **R** gleiche oder verschiedene einwertige, gegebenenfalls halogensubstituierte, über SiC-gebundene $C_1$-$C_{15}$-Kohlenwasserstoffreste,
- **$R^1$** gleiche oder verschiedene einwertige $C_1$-$C_6$-Alkylreste,
- **x** 0, 1, 2 oder 3, durchschnittlich 0,9 bis 1,8,
- **y** 0,1 2, oder 3, durchschnittlich 0,01 bis 2,0 und
- **z** 0, 1, 2 oder 3, durchschnittlich 0,0 bis 0,5 bedeutet,

mit der Maßgabe, daß die Summe von **x**, **y** und **z** höchstens 3,5 beträgt.

**4.** Verfahren nach einem der Ansprüche 1 bis 3, wobei Salze (B) verwendet werden, die erhältlich sind aus Säuren und Polysiloxanen, die aufgebaut sind aus Einheiten der allgemeinen Formel II

$$R^2_a R^3_b (OR^4)_c SiO_{\frac{4-a-b-c}{2}} \qquad (II),$$

in der

- **$R^2$** gleiche oder verschiedene einwertige, von basischem Stickstoff freie, über SiC-gebundene $C_1$-$C_{15}$-Kohlenwasserstoffreste oder Wasserstoff,
- **$R^3$** gleiche oder verschiedene einwertige SiC-gebundene Reste mit basischem Stickstoff,
- **$R^4$** Wasserstoff oder gleiche oder verschiedene $C_1$-$C_4$-Alkylreste bedeutet,
- **a** 0, 1, 2 oder 3, durchschnittlich 0 bis 2, insbesondere 0 bis 1,8,
- **b** 0 oder 1, durchschnittlich 0,1 bis 0,6, insbesondere 0,15 bis 0,30 und
- **c** 0, 1, 2 oder 3, durchschnittlich 0,1 bis 0,8, insbesondere 0,2 bis 0,6 ist.

**5.** Verfahren nach einem der Ansprüche 1 bis 4, wobei die im zweiten Verfahrensschritt eingesetzten Alkalisilicate (C1) und Alkalisiliconate (C2) aus Einheiten der allgemeinen Formel IV

$$M_d R^7_e Si\ O_{\frac{4-d-e}{2}} \qquad (IV),$$

aufgebaut sind, in der

- **M** Natrium oder Kaliumatome,
- **$R^7$** gleiche oder verschiedene einwertige, über SiC-gebundene $C_1$-$C_{15}$-Kohlenwasserstoffreste,
- **d** 0, 1, 2 oder 3, durchschnittlich 0,5 bis 2,2, insbesondere 0,8 bis 1,5 und
- **e** 0, 1, 2, oder 3, durchschnittlich 0 bis 2,0, insbesondere 0 bis 1,5 bedeuten

mit der Maßgabe, daß die Summe der jeweiligen Durchschnittswerte von **d** und **e** höchstens 3,0 beträgt.

**6.** Verfahren nach einem der Ansprüche 1 bis 5, wobei im zweiten Schritt pro Gewichtsteil der Summe der im ersten Schritt eingesetzten Komponenten (A1) Organoalkoxysilan,

(A2) Alkoxygruppen enthaltendes Organosiloxan und Salz (B)
0,05 bis 3 Gewichtsteile der Summe aus Alkalisilicaten
(C1) und Alkalisiliconaten (C2),
jeweils berechnet als wasserfreie Stoffe eingesetzt werden.

**7.** Verfahren nach einem der Ansprüche 1 bis 6, wobei im Mauerwerk aufsteigende Feuchtigkeit durch Injektion der vorstehenden Komponenten (A1) oder (A2) oder (A3) und (B) und (C1) oder (C2) oder (C3) in das Mauerwerk

bekämpft wird.

## Claims

1. Process for the water-repellent impregnation of masonry by treating the masonry in a first step with a highly dispersed impregnating composition which is emulsified in water and which includes

   (A1) organoalkoxysilane or
   (A2) organosiloxane containing alkoxy groups or
   (A3) a mixture made from organoalkoxysilane and organosiloxane containing alkoxy groups and
   (B) a salt of a water-soluble organic or inorganic acid and organopolysiloxane, which includes, as well as other organosiloxane units, siloxane units which have monovalent radicals linked via SiC and with basic nitrogen in amounts of at least 0.5% by weight of basic nitrogen, based on the weight of the organopolysiloxane,
   where in a second step the masonry is treated with a solution in water of
   (C1) alkali metal silicate or
   (C2) alkali metal siliconate or
   (C3) a mixture made from alkali metal silicate and alkali metal siliconate.

2. Process according to Claim 1, where the organoalkoxysilanes (A1) have 1 or 2 identical or different, monovalent $C_1$-$C_{15}$-hydrocarbon radicals which are linked via SiC and are halogen-substituted if desired, and the other radicals are identical or different $C_1$-$C_6$-alkoxy radicals.

3. Process according to Claim 1 or 2, where the organosiloxanes (A2) are built up from units of the general formula I

$$R_xSi(OR^1)_y(OH)_zO_{\frac{4-x-y-z}{2}} \qquad (I),$$

in which

R are identical or different, monovalent $C_1$-$C_{15}$-hydrocarbon radicals which are linked via SiC and may be halogen-substituted if desired,
$R^1$ are identical or different, monovalent $C_1$-$C_6$-alkyl radicals,
x is 0, 1, 2 or 3 and its average is from 0.9 to 1.8,
y is 0, 1, 2 or 3 and its average is from 0.01 to 2.0 and
z is 0, 1, 2 or 3 and its average is from 0.0 to 0.5, with the proviso that the total of x, y and z is not more than 3.5.

4. Process according to any one of Claims 1 to 3, where salts (B) are used which can be obtained from acids and polysiloxanes which are built up from units of the general formula II

$$R^2_aR^3_b(OR^4)_cSiO_{\frac{4-a-b-c}{2}} \qquad (II),$$

in which

$R^2$ are identical or different, monovalent $C_1$-$C_{15}$-hydrocarbon radicals which are linked via SiC and are free from basic nitrogen, or are hydrogen,
$R^3$ are identical or different, monovalent SiC-linked radicals with basic nitrogen,
$R^4$ are hydrogen or identical or different $C_1$-$C_4$-alkyl radicals,
a is 0, 1, 2 or 3 and its average is from 0 to 2, in particular from 0 to 1.8,

b is 0 or 1 and its average is from 0.1 to 0.6, in particular from 0.15 to 0.30 and
c is 0, 1, 2 or 3 and its average is from 0.1 to 0.8, in particular from 0.2 to 0.6.

**5.** Process according to any one of Claims 1 to 4, where the alkali metal silicates (C1) and alkali metal siliconates (C2) used in the second step are built up from units of the general formula IV

$$M_dR^7_eSi\,O_{\frac{4-d-e}{2}} \qquad (IV),$$

in which

M is sodium or potassium atoms,
$R^7$ are identical or different, monovalent $C_1$-$C_{15}$-hydrocarbon radicals linked via SiC,
d is 0, 1, 2 or 3 and its average is from 0.5 to 2.2, in particular from 0.8 to 1.5 and
e is 0, 1, 2 or 3 and its average is from 0 to 2.0, in particular from 0 to 1.5
with the proviso that the total of the respective averages of d and e is not more than 3.0.

**6.** Process according to any one of Claims 1 to 5, where, per part by weight of the total of the components (A1) organoalkoxysilane, (A2) organosiloxane containing alkoxy groups and salt (B) used in the first step, from 0.05 to 3 parts by weight of the total of alkali metal silicates (C1) and alkali metal siliconates (C2) are used in the second step, calculated in each case as anhydrous substances.

**7.** Process according to any one of Claims 1 to 6, where rising damp in the masonry is combated by injecting the above components (A1) or (A2) or (A3) and (B) and (C1) or (C2) or (C3) into the masonry.

**Revendications**

**1.** Procédé pour l'imprégnation hydrofuge de maçonnerie, dans lequel la maçonnerie est traitée dans une première étape avec une composition d'imprégnation fortement dispersée, émulsifiée au moyen d'eau et comprenant

(A1) un organoalkoxysilane ou
(A2) un organosiloxane contenant des groupements alkoxy, ou
(A3) un mélange d'organoalkoxysilane et d'organosiloxane contenant des groupements alkoxy, et
(B) un sel d'un acide organique ou inorganique soluble dans l'eau et d'un organopolysiloxane comprenant, outre d'autres unités organosiloxane, des unités siloxane ayant des radicaux monovalents liés par SiC et comprenant de l'azote basique en des quantités d'au moins 0,5 % en poids d'azote basique par rapport au poids de l'organopolysiloxane,

dans lequel, dans une seconde étape, la maçonnerie est traitée avec une solution aqueuse de

(C1) silicate de métal alcalin ou
(C2) siliconate de métal alcalin ou
(C3) mélange de silicate de métal alcalin et de siliconate de métal alcalin.

**2.** Procédé selon la revendication 1, dans lequel les organoalkoxysilanes (A1) comportent 1 ou 2 radicaux hydrocarbures en $C_1$-$C_{15}$, monovalents, identiques ou différents, qui sont liés par SiC et qui sont éventuellement substitués par des halogènes, et dans lequel les autres radicaux sont des radicaux alkoxy en $C_1$-$C_6$, identiques ou différents.

**3.** Procédé selon la revendication 1 ou 2, dans lequel les organosiloxanes (A2) sont formés d'unités de formule générale I

$$R_xSi(OR^1)_y(OH)_zO_{(4-x-y-z)/2} \qquad (I),$$

dans laquelle

R sont des radicaux hydrocarbures en $C_1$-$C_{15}$, monovalents, identiques ou différents, qui sont liés par SiC et qui sont éventuellement substitués par des halogènes,
$R^1$ sont des radicaux alkyle en $C_1$-$C_6$, monovalents, identiques ou différents,
x est 0, 1, 2 ou 3 et sa moyenne est de 0,9 à 1,8,
y est 0, 1, 2 ou 3 et sa moyenne est de 0,01 à 2,0, et
z est 0, 1, 2 ou 3 et sa moyenne est de 0,0 à 0,5, la somme de x, y et z n'excédant pas 3,5.

**4.** Procédé selon l'une quelconque des revendications 1 à 3, dans lequel on utilise des sels (B) qui peuvent être obtenus à partir d'acides et de polysiloxanes constitués d'unités de la formule générale II

$$R^2_aR^3_b(OR^4)_cSiO_{(4-a-b-c)/2} \quad \text{(II)},$$

dans laquelle

$R^2$ sont des radicaux hydrocarbures en $C_1$-$C_{15}$, monovalents, identiques ou différents, qui sont liés par SiC et qui sont exempts d'azote basique, ou sont de l'hydrogène,
$R^3$ sont des radicaux monovalents, identiques ou différents, liés par SiC, comportant de l'azote basique,
$R^4$ sont de l'hydrogène ou des radicaux alkyle en $C_1$-$C_4$, identiques ou différents,
a est 0, 1, 2 ou 3, et sa moyenne est de 0 à 2, en particulier de 0 à 1,8,
b est 0 ou 1, et sa moyenne est de 0,1 à 0,6, en particulier de 0,15 à 0,30, et
c est 0, 1, 2 ou 3, et sa moyenne est de 0,1 à 0,8, en particulier de 0,2 à 0,6.

**5.** Procédé selon l'une quelconque des revendications 1 à 4, dans lequel les silicates de métal alcalin (C1) et les siliconates de métal alcalin (C2) utilisés dans la seconde étape sont formés d'unités de formule générale IV

$$M_dR^7_eSiO_{(4-d-e)/2} \quad \text{(IV)},$$

dans laquelle

M est un atome de sodium ou de potassium,
$R^7$ sont des radicaux hydrocarbures en $C_1$-$C_{15}$, monovalents, identiques ou différents, qui sont liés par SiC,
d est 0, 1, 2 ou 3, et sa moyenne est de 0,5 à 2,2, en particulier de 0,8 à 1,5, et
e est 0, 1, 2 ou 3, et sa moyenne est de 0 à 2,0, en particulier de 0 à 1,5,
la somme des moyennes respectives de d et e n'excédant pas 3,0.

**6.** Procédé selon l'une quelconque des revendications 1 à 5, dans lequel, pour chaque partie en poids du total des composants (A1) organoalkoxysilane, (A2) organosiloxane contenant des groupements alkoxy et sel (B) utilisés dans la première étape, on utilise dans la seconde étape de 0,05 à 3 parties en poids du total des silicates de métal alcalin (C1) et de siliconates de métal alcalin (C2), calculés chaque fois en tant que substances anhydres.

**7.** Procédé selon l'une quelconque des revendications 1 à 6, dans lequel l'humidité ascendante dans la maçonnerie est combattue en injectant les composants susmentionnés (A1) ou (A2) ou (A3) et (B) et (C1) ou (C2) ou (C3) dans la maçonnerie.